# EUROPEAN PATENT SPECIFICATION

(11) **EP 0 329 221 B1**
(45) Date of publication and mention of the grant of the patent: **21.09.1994**
(21) Application number: 89200278.3
(22) Date of filing: 07.02.1989
(51) Int. Cl.: A21C 13/00, A21B 3/04

(54) **Electronic control system for a leavening chamber**
Elektronisches Steuersystem für einen Gärungsraum
Système de commande électronique pour une chambre de levage de pain

(30) Priority: 16.02.1988 IT 1941388
(43) Date of publication of application: 23.08.1989
(73) Proprietor: CASTEL MAC S.p.A., I-31033 Castelfranco Veneto (Treviso) (IT)
(72) Inventor: Portelli, Paolo, I-31021 Mogliano Veneto (Treviso) (IT)
(74) Representative: Mittler, Enrico

(56) References cited:
- EP-A- 0 092 537
- EP-A- 0 117 521
- EP-A- 0 131 264
- EP-A- 0 174 681
- FR-A- 2 501 471

## Description

The present invention relates to an electronic control system for a leavening chamber.

It is well known that a leavening chamber is an environment in which a soft pasty mass, for bread or other foodstuffs, is introduced and kept at a controlled temperature and humidity for the length of time required for leavening or fermentation of the dough.

The length of time required for leavening varies with the type of dough, but it is always a few hours. This obviously creates problems in relation to products to be baked and subsequently to be put on sale early in the morning, such as bread in particular.

To solve these problems leavening cells have been conceived in which the leavening phase may be delayed in time by the introduction of one or more prior phases of predetermined duration in which leavening is stopped.

With the development of electronics it has also become possible to control the operation of the chamber in an automatic and programmable manner, leaving to the operator just the task of operating a few presetting and start controls at the beginning of the cycle.

EP-A-0174681 discloses an electronic control system for a leavening chamber, which is arranged according to the preamble of claim 1 and allows performing of a desired leavening program formed by a predetermined sequence of process phases with selectable duration and environmental data.

EP-A-0131264 discloses a combined kneading, leavening, degassing, forming and baking machine, which provides for a plurality of leavening phases alternated with degassing phases.

The object of the present invention is to introduce some improvements to the current leavening chambers with programmable electronic controls in order to broaden their field of application and originate an optimal product.

In view of such object the present invention provides for the leavening chamber to be equipped with an electronic control system comprising a microprocessor control unit, a control keyboard, means for taking readings of environmental data inside the chamber, means for the operation of means for the variation of said environmental data, display means for the observation of the operating cycle of the chamber and a programme storage unit associated with said control unit and storing a preset programme for performing a predetermined sequence of process phases having duration and environmental data which can be selected and changed by means of said keyboard, characterized in that said programme storage unit (28) includes a plurality of selectable preset programmes which differ from each other as regards the phase sequence and the desired duration and environmental data, and which can be selected and changed by means of said keyboard (29).

It appears obvious that in this way the leavening chamber may be used for several operating programmes, each conceived for a specific product to be subjected to leavening and/or to be kept in the chamber for a certain length of time.

In particular, it will be possible for some programmes to be set by the manufacturer, while others may be set by the user and varied to suit current requirements.

The use of the leavening chamber thus becomes highly flexible, adaptable to the most varied products, whether they are anticipated in the design stage or are subsequently brought to the attention of the user.

According to one preferred embodiment of the present invention it is also provided that at least one of the preset programmes of the control system include, after at least one phase in which leavening is stopped, two subsequent leavening phases of different duration and with different values of the environmental data (temperature and humidity). Preferably, the first of these is of shorter duration and with lower values of the environmental data than the latter.

It has been possible to ascertain that in this way leavening occurs in an optimum manner for all types of products, even for those which could turn out to be imperfect with only one leavening phase.

It is also preferably provided for that the duration of the operating cycle of the chamber may be extendable up to one week and more so as to avoid work stoppages even of several days.

In view of this, the display means of the control system according to the invention preferably include an alphanumeric display unit which can indicate the days of the week.

Lastly it is preferably provided for that the control system according to the invention also include driving means for the operation of the heating elements of the oven destined for baking the leavened product. The same control system thus operates throughout the entire production cycle for bread or other pastry product for which the leavening chamber is destined.

These and other features of the present invention shall be made obvious by the following detailed description of one embodiment illustrated, as a non-limiting example, in the enclosed drawings, in which:
Fig. 1 is a overall view of the electronic control system according to the present invention;
Fig. 2 shows an example of an electronic control panel which may be used as an integrating part of the control system of Fig. 1;
Fig.s 3 to 8 illustrate in detail a few parts of the control system of Fig. 1;
Fig. 9 gives a schematic illustration of the execution of an example of an operating cycle of a leavening chamber equipped with the control system of Fig. 1.

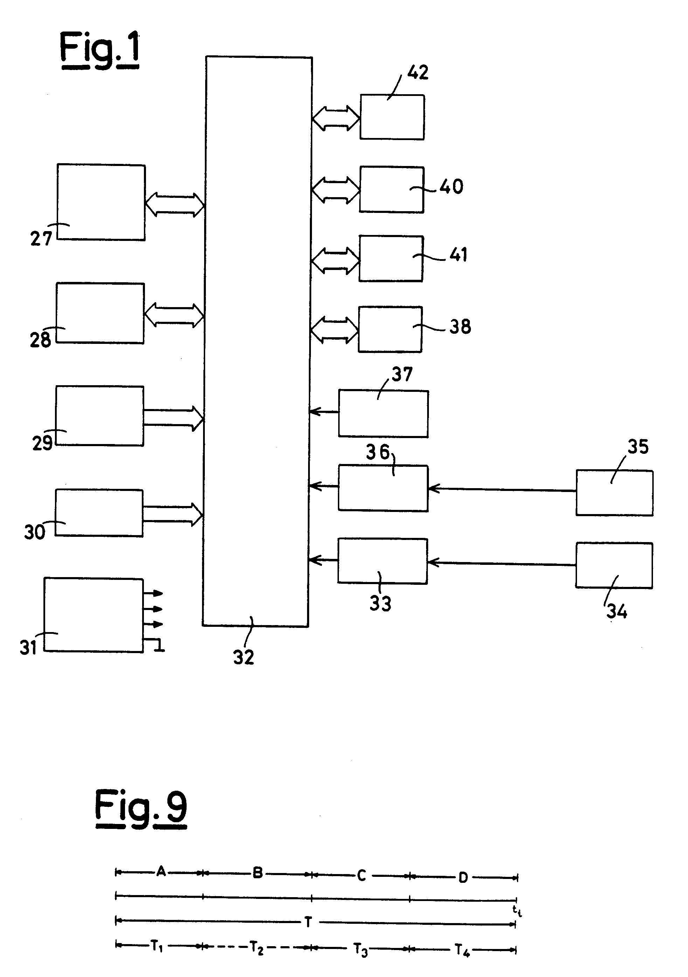

The electronic control system illustrated in Fig. 1 comprises a microprocessor control unit 32, with which are associated a control keyboard 29, a temperature probe 35 and a humidity probe 34 positioned inside the leavening chamber, a group of relays 42 for driving the heating, cooling, humidifying, ventilating and defrosting means, as well as for external apparata such as a baking oven, an alphanumeric display unit 40 and a digital display unit 41 for the visual presentation of the data regarding the execution of the cycle and of the environmental data (humidity and temperature) of the leavening chamber, and a group of pilot lights 38 for signals of various kinds.

There are also provided a programme storage unit 28 of the EPROM type, a clock unit 27, a system clock 37, a mode selection unit 30 and a power supply unit 31.

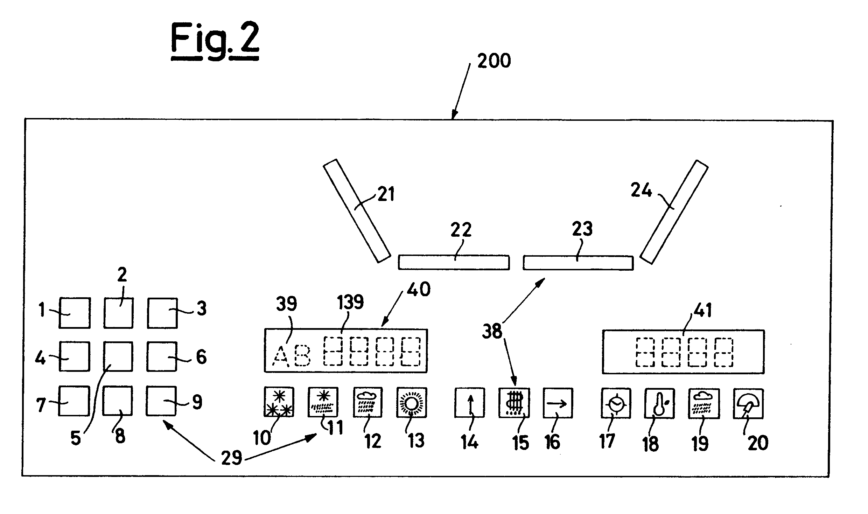

The keyboard 29, the display units 40 and 41 and the pilot lights 38 form part of a control panel 200 shown in Fig. 2.

As can be seen from this figure, the keyboard 29 includes a key 1 which enables the insertion of data, a key 3 for storing the inserted data, a key 2 for the selection of the desired programme among those stored in the programme storage unit 28, a key 4 for adjusting the clock 27, a key 6 for the system's self-diagnosis, a key 5 for the execution of the set programme, a key 7 for the programmed start-up of an external apparatus, two keys 8, 9 for the transition from the automatic to the manual mode and vice versa, four keys 10, 11, 12, 13 for the selection of the operative phases included in the programmes, three keys 17, 18, 19 for the selection of the values of duration, temperature and humidity within each operative phase, a key 20 for setting the end-of-cycle hour and date and two keys 14, 16 for setting the numerical values on the display units.

The alphanumeric display unit 40 comprises a part in letters 39 for the indication of the day of the week and a digital part 139 for the indications of the values of the actual time and, where appropriate, of the number of the programme. The digital display unit 41 is used in turn for the indication of the values of temperature, humidity and duration, first of those set and then of the values taken.

Lastly the group of pilot lights 38 includes four pilot lights 21, 22, 23, 24 which highlight the successive operative phases included in the operating cycle of the chamber (four in the example considered) and an additional pilot light 15 which indicates the operation of the defroster.

Going back to Fig. 1, the microprocessor control unit 32 incorporates storage units for programmes (EPROM) and for data (RAM) as well as analog/digital converters.

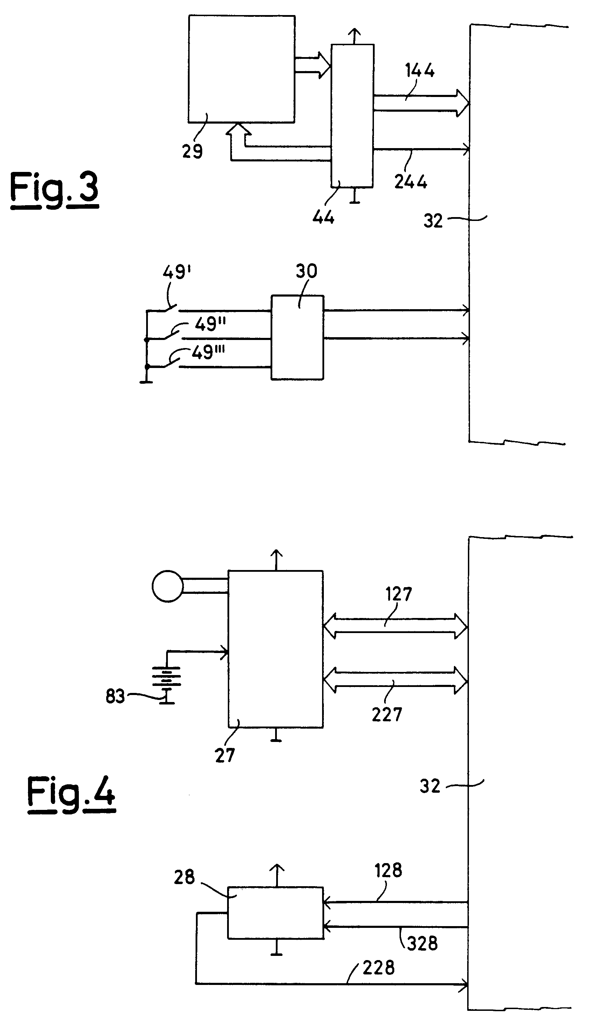

As shown in detail in Fig. 3, the keyboard 29 is connected to the control unit 32 by means of a coder 44, which communicates with the above control unit by means of a data bus 144. There is also provided a synchronization signal 244.

The mode selection unit 30 is also connected to the control unit 32 and is activated by means of the selection switches 49'-49''-49''' between the "manual", "automatic" and "test" operating conditions.

As shown in Fig. 4, the programme storage unit 28 is connected to the control unit 32 by means of a serial input line 128 and a serial output line 228, and also receives a clock signal 328.

The clock unit 27, supplied by a battery 83, in turn communicates with the control unit 32 by means of a data bus 127 and a control bus 227.

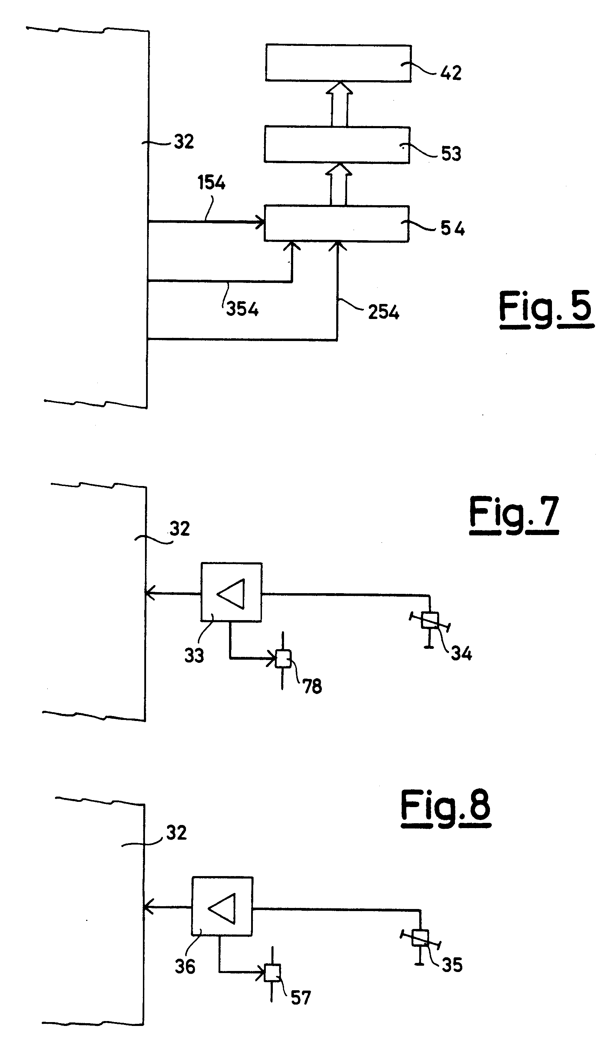

As shown in Fig. 5, the group of relays 42 is controlled by a group of controls 53 in turn controlled by a sliding register 54, which receives a serial input signal 154, an enabling signal 254 and a clock signal 354 from the control unit 32.

As shown in Fig. 6, the letter part of the alphanumeric display unit 40 is controlled by two groups of controls 62, 64 in turn controlled by corresponding sliding registers 61, 60 connected one to the other which receive a serial input signal 160, an enabling signal 260 and a clock signal 360 from the control unit 32.

The digital part 139 of the display unit 40 and the digital display unit 41 are in turn controlled by the corresponding groups of controls 73, 75 and by updating logics 72, 71, connected one to the other, which receive a serial input signal 171, an enabling signal 271 and a clock signal 371.

Lastly the pilot lights 38 are controlled by the corresponding groups of controls 66 in turn controlled by the corresponding sliding registers 65, connected one to the other, which receive a serial input signal 165, an enabling signal 265 and a clock signal 365.

As shown in Fig. 7, the humidity probe 34 is connected to the control unit 32 by a comparator-amplifier 33 equipped with a threshold calibration potentiometer 78.

As shown in Fig. 8, the temperature probe 34 is in turn connected to the control unit 32 by a comparator-amplifier 36 equipped with a threshold calibration potentiometer 57.

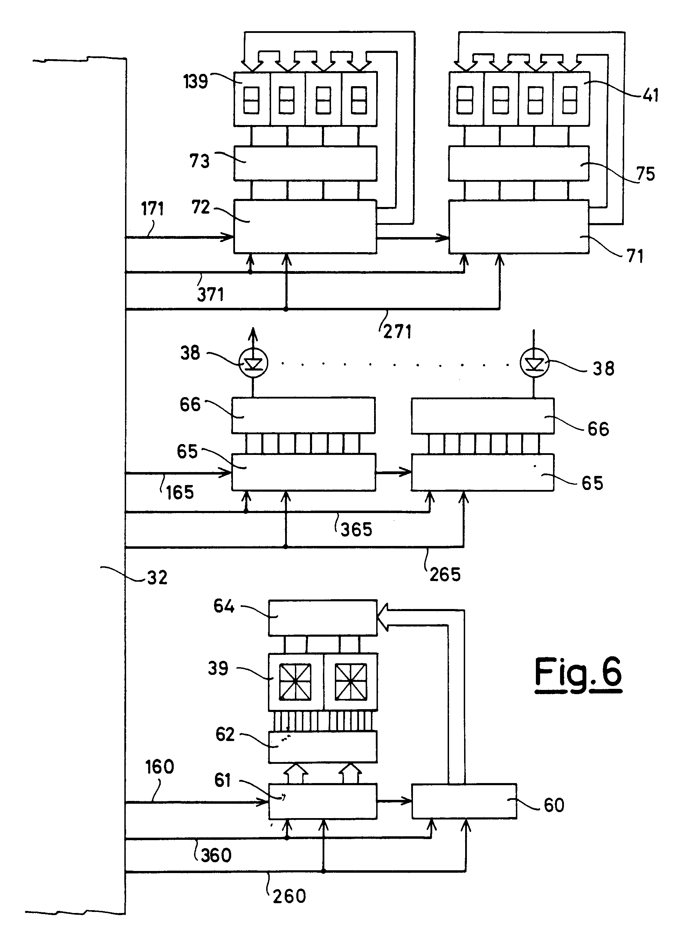

The control system illustrated in the drawings is in a position to run automatically and in a programmed manner, or entirely in the manual mode, a plurality of cycles of operation, preferably but not compulsorily of the type illustrated in Fig. 9, that is comprising a phase A containing a first stop to the leavening process, a phase B containing a second stop to the leavening process, a first leavening phase C and second leavening phase D, all subject to a controlled and programmable temperature and humidity. The various cycles differ substantially in the duration, which may in total be as long as one week, as well as in the different combinations of humidity and temperature.

The selection of the cycle is executed among all those (for example, ten) stored in the programme storage unit 28, optionally modifiable according to the user's wishes.

Once the desired cycle has been selected, since the day and the time of the start of the operation of the oven or the endof cycle tᵢ are known or are determined as required, from the programming of the duration T₁ of the first stopping phase A, of the duration T₃ of the first leavening phase C and of the duration T₄ of the second leavening phase D automatically derives the duration T₂ of the second stopping phase B, which is not programmable by means of the control panel 200 of Fig. 2 but is on the other hand automatically calculated by the control unit 32. Of course one or more of the durations T₁, T₃, T₄, may be zero and the corresponding phases may thus be missing.

The operation of a working cycle such as that of Fig. 9 may be programmed on the control panel 200 of fig. 2 and subsequently assured by the control system of Fig. 1 in the following manner.

At start-up, by means of the key 2, the operator selects the cycle of operation desired among those stored in the storage unit 28 or else sets a different programme to replace one of those previously stored in the storage unit, using for this purpose keys 18, 19, 17, 14, 16, 20 for the values of temperature and duration and keys 10, 11, 12, 13 for the different operative phases and finally keys 1, 3 for storing the inserted data. Each programmed value appears in turn on the display units 40, 41.

Once the desired programme has been selected, the cycle of operations is started by pressing key 5. From this moment on the control unit of Fig. 1, and in particular the control unit 32 which constantly compares the current environmental data with the programmed data, ensures the execution of the desired functions and the maintenance of the desired environmental conditions in the different phases of the cycle, as well as the transition from one phase to the next. In particular it ensures a temperature control of the neutral-point type, that is with a heating or cooling action which operates when the temperatures deviates from a preset value, in all the phases of the cycle. During each phase the control system also ensures the control of the humidity in one direction only, that is only with the possibility of an increase of the humidity. Periodically during phases A and B (more accurately when the heating, cooling and humidifying means are in operation) and continuously during phases C and D, ventilation is also in operation. Lastly, periodically during the operation of the cycle and always during the transition from one phase to the next, automatic defrosting of the cycle occurs, executed with resistances or simply by ventilation according to the programmed temperature.

Going into greater detail, the control of temperature is executed by using the analog signal read at the output of the temperature probe 35, which after comparison with the threshold set by the potentiometer 78 and after simultaneous amplification is made to arrive at the microprocessor 32, where it is converted to digital by the latter's internal converter. The microprocessor compares the data taken with those programmed, receives the appropriate instructions and, in addition to providing an input for the display unit 41, it sends instructions to the appropriate driving relays 42 for the operation of the heating or cooling means and for simultaneous ventilation.

The control of humidity is in turn executed by using the analog signal read at the output of the humidity probe 34. The analog signal, after comparison with the threshold set by the potentiometer 57 and simultaneous amplification, is transmitted to the microprocessor 32, whose internal converter converts it to digital. The microprocessor compares the data taken with those programmed, receives the appropriate instructions and then, in addition to providing an input to the display unit 41, also sends instructions to the relay unit 42 for the operation of the humidification means and, simultaneously, of the ventilation means.

Finally the defrosting function is executed automatically, that is in the absence of external programmes. On each occasion the microprocessor 32 analyses the operating stage of the cycle, compares the data with the internal programming storage unit and then controls the appropriate driving relay 42 for the operation of the defrosting means.

Clearly the various controls and functions are co-ordinated by the microprocessor 32 (with the assistance of the internal programme storage unit, in which the selected programme is temporarily stored) in relation to the programmed data inserted by means of the keyboard 29 and to the data taken by the probes for temperature 35 and humidity 34, thus ensuring the correct execution of the selected cycle.

It may happen that a power cut occurs during the execution of the cycle. In that case an emergency saving unit and reset cuts in for the data which is internal to the microprocessor 32. All data are immediately stored in the microprocessor and placed in storage, so that no loss occurs. This condition persists until, once the mains power supply has returned to normal, the microprocessor 32 again enables the output functions.

## Claims

1. Electronic control system for a leavening chamber, comprising a microprocessor control unit (32), a control keyboard (29), means (34, 35) for taking readings of environmental data inside the chamber, means (42) for the operation of means for the variation of said environmental data, display means (38, 40, 41) for the observation of the operating cycle of the chamber and a programme storage unit (28) associated with said control unit (32) and storing a preset programme for performing a predetermined sequence of process phases having direction and environmental data which can be selected and changed by means of said keyboard (29), characterized in that said programme storage unit (28) includes a plurality of selectable preset programmes which differ from each other as regards the phase sequence and the desired duration and environmental data, and which can be selected and changed by means of said keyboard (29).

2. Electronic control system according to claim 1, characterized in that at least one of said preset programmes comprises at least one stop phase and two subsequent leavening phases, said leavening phases being set of different duration, and with different desired values of the environmental data.

3. Electronic control system according to claim 2, characterized in that said two leavening phases comprise a first leavening phase of shorter duration and with lower values of the environmental data, than the second leavening phase.

4. Electronic control system according to claim 1, characterized in that at least one of said preset programmes comprises a first stop phase (A), a second stop phase (B), a first leavening phase (C) and second leavening phase (D).

5. Electronic control system according to Claim 4, characterized in that all the above phases are with programmable temperature and humidity, said first stop phase and said leavening phases being also of programmable duration and said control unit (32) being programmed so as to calculate the duration of the second stop phase on the basis of the end-of-cycle time and of the duration of the other three phases.

6. Electronic control system according to Claim 1, characterized in that at least one of said programmes has a duration extendable up to one week.

7. Electronic control system according to Claim 6, characterized in that said display means (38, 40, 41) comprise an alphanumeric display unit (40) with a part in letters (39) for the display of the days of the week.

8. Electronic control system according to Claim 1, characterized in that it comprises driving means (42) for heating means of a baking oven.

9. Electronic control system according to Claim 1, characterized in that it comprises a mode selector (30) for the selection of "manual", "automatic", "test" operation.

## Patentansprüche

1. Elektronisches Steuersystem für eine Gärkammer mit einer Mikroprozessorsteuereinheit (32), einer Steuertastatur (29), Mittel (34, 35) zum Ablesen von Umweltdaten im Inneren der Kammer, Mittel (42) für die Betätigung von Mitteln für die Variation der Umweltdaten, Anzeigemittel (38, 40, 41) für die Beobachtung des Betriebszyklus der Kammer und einer mit der Steuereinheit (32) verknüpften Programmspeichereinheit (28), die ein voreingestelltes Programm zum Durchführen einer vorbestimmten Abfolge von Prozeßphasen mit Dauer- und Umweltdaten speichert, die mittels der Tastatur (29) ausgewählt und geändert werden können,
dadurch gekennzeichnet, daß die Programmspeichereinheit (28) eine Mehrzahl von wählbaren voreingestellten Programmen enthält, die sich voneinander in Bezug auf die Phasenabfolge und der gewünschten Dauer- und Umweltdaten unterscheiden und die mittels der Tastatur (29) ausgewählt und geändert werden können.

2. Elektronisches Steuersystem nach Anspruch 1,
dadurch gekennzeichnet, daß mindestens eines der voreingestellten Programme mindestens eine Stopphase und zwei folgende Gärphasen aufweist, wobei die Gärphasen mit verschiedener Dauer und mit verschiedenen gewünschten Werten der Umweltdaten eingestellt sind.

3. Elektronisches Steuersystem nach Anspruch 2,
dadurch gekennzeichnet, daß die zwei Gärphasen eine erste Gärphase kürzerer Dauer und mit niedrigeren Werten der Umweltdaten als die zweite Gärphase aufweist.

4. Elektronisches Steuersystem nach Anspruch 1,
dadurch gekennzeichnet, daß mindestens eines der voreingestellten Programme eine erste Stopphase (A), eine zweite Stopphase (B), eine erste Gärphase (C) und eine zweite Gärphase (D) aufweist.

5. Elektronisches Steuersystem nach Anspruch 4,
dadurch gekennzeichnet, daß alle obigen Phasen mit programmierbarer Temperatur und Feuchtigkeit sind, wobei die erste Stopphase und die Gärphasen auch von programmierbarer Dauer sind und die Steuereinheit (32) so programmiert ist, daß sie die Dauer der zweiten Stopphase auf der Basis der Endzykluszeit und der Dauer der anderen drei Phasen berechnet.

6. Elektronisches Steuersystem nach Anspruch 1,
dadurch gekennzeichnet, daß mindestens eines der Programme eine Dauer aufweist, die bis zu einer Woche ausdehnbar ist.

7. Elektronisches Steuersystem nach Anspruch 6,
dadurch gekennzeichnet, daß die Anzeigemittel (38, 40, 41) eine alphanumerische Anzeigeneinheit (40) mit einem Teil in Buchstaben (39) für die Anzeige der Tage der Woche aufweisen.

8. Elektronisches Steuersystem nach Anspruch 1,
dadurch gekennzeichnet, daß es Antriebsmittel (42) für Heizmittel eines Backofens aufweist.

9. Elektronisches Steuersystem nach Anspruch 1,
dadurch gekennzeichnet, daß es einen Moduswähler (30) für die Auswahl von "manuell", "automatisch", "testender Betrieb" aufweist.

## Revendications

1. Système de commande électronique pour une chambre de levage, qui comprend une unité (32) de commande à microprocesseur, un clavier de commande (29), des moyens (34, 35) pour effectuer des lectures de données climatiques à l'intérieur de la chambre, un moyen (42) pour actionner le moyen permettant de faire varier lesdites données climatiques, des moyens d'affichage (38, 40, 41) pour l'observation du cycle opératoire de la chambre et une unité (28) de stockage de programmes associée à ladite unité de commande (32) et mémorisant un programme préétabli permettant de réaliser une séquence prédéterminée de phases de traitement ayant une durée et des données climatiques qui peuvent être choisies et modifiées à l'aide dudit clavier (29), **caractérisé** en ce que ladite unité (28) de stockage de programmes contient une pluralité de programmes préétablis pouvant être choisis qui diffèrent l'un de l'autre en ce qui concerne la séquence des phases et les données climatiques et la durée souhaitée et qui peuvent être sélectionnés et modifiés à l'aide dudit clavier (29).

2. Système de commande électronique selon la revendication 1, **caractérisé** en ce que l'un au moins desdits programmes préétablis comprend au moins une phase d'arrêt et deux phases ultérieures de levage, lesdites phases de levage étant établies à des durées différentes et avec des valeurs souhaitées différentes pour les données climatiques.

3. Système de commande électronique selon la revendication 2, **caractérisé** en ce que lesdites deux phases de levage comprennent une première phase de levage de durée plus courte et avec des valeurs plus faibles pour les données climatiques par rapport à la seconde phase de levage.

4. Système de commande électronique selon la revendication 1, **caractérisé** en ce que l'un au moins desdits programmes préétablis comprend une première phase d'arrêt (A), une seconde phase d'arrêt (B), une première phase de levage (C) et une seconde phase de levage (D).

5. Système de commande électronique selon la revendication 4, **caractérisé** en ce que toutes les phases ci-dessus sont avec une température et une humidité programmables, ladite première phase d'arrêt et lesdites phases de levage étant également de durée programmable et ladite unité de commande (32) étant programmée pour calculer la durée de la seconde phase d'arrêt sur la base de l'instant de fin de cycle et de la durée des trois autres phases.

6. Système de commande électronique selon la revendication 1, **caractérisé** en ce que l'un au moins desdits programmes a une durée pouvant être étendue jusqu'à une semaine.

7. Système de commande électronique selon la revendication 6, **caractérisé** en ce que lesdits moyens d'affichage (38, 40, 41) comprennent une unité d'affichage alphanumérique (40) avec une partie alphabétique (39) destinée à l'affichage des jours de la semaine.

8. Système de commande électronique selon la revendication 1, **caractérisé** en ce qu'il comprend un moyen d'excitation (42) pour un moyen de chauffage d'un four de cuisson.

9. Système de commande électronique selon la revendication 1, **caractérisé** en ce qu'il comprend un sélecteur de mode (30) pour le choix d'un fonctionnement "manuel", "automatique", "test".
